# EUROPEAN PATENT APPLICATION

(11) **EP 2 418 519 A1**
(43) Date of publication of application: **15.02.2012**
(21) Application number: 11177109.3
(22) Date of filing: 10.08.2011
(51) Int. Cl.: G02B 1/10, G02B 1/11, G02B 1/04

(54) **Infrared imaging device with a coated optical lens**

(30) Priority: 10.08.2010 US 853826
(71) Applicant: Fluke Corporation Inc., Everett, WA 98203 (US)
(72) Inventor: Khajurivala, Kumar, M, Leominster, MA Massachusetts MA 01453 (US)
(74) Representative: Howe, Steven

(57) **Abstract**

The disclosure describes a coated non-germanium lens for an IR imaging device. The coating may have a first layer and a second layer. The first layer is adapted to adhere well to the non-gennanium lens and to provide a good adhering surface to the second layer, the second layer being not generally adherable to the non-germanium lens.

## Description

### FIELD OF THE INVENTION

The invention relates to coated optical lenses for infrared imaging devices.

### BACKGROUND

Thermal images of systems that include electrical and/or mechanical devices and structures can be useful for monitoring and/or analyzing the performance thereof. Such systems are useful for design, development, and during operational service, for example, for inspection and maintenance purposes. The thermal or infrared images may be captured and displayed by an infrared (IR) imaging system, such as an IR camera with an optical lens.

Germanium lenses are widely used in IR cameras. These lenses comprise approximately 100% polycrystalline or crystalline germanium with a negligible amount of germanium oxides, nitrides, or other germanium compounds. The exposed surface of the lens is typically coated with a diamond like carbon (DLC) film to protect the lens against harsh environment, such as blowing sand, rain, and salt water, and to serve as an anti-reflective coating. Unfortunately, while germanium lenses have good transmission properties at low temperatures, transmission is reduced at higher temperatures due to an increase in the absorption coefficient and begins to degrade optical performance in IR wavelengths. Pronounced transmission degradation start at about 57 degrees Celsius and rapid degradation begins at about 200 degrees Celsius. The index of refraction of germanium is also very dependent on temperature, and defocuses a lens with only a few degrees change in temperature.

Accordingly, alternative materials for the exposed surface of lenses have been used in place of germanium lenses. These include zinc selenide (ZnSe), zinc sulfide (ZnS), and chalcogenides (such as AMTIR-1, AMTIR-3, AMTIR-4, AMTIR-5, and GASIR from Umicore). While lenses made from some of these materials do not have the opacity and dispersion problems associated with germanium, protective coatings such as DLC do not adhere well to these materials. By not generally adherable, Applicant means the coating is not able to pass the adhesion test specified in MIL-PRF-13830, C.4.5.12, such that the coating will show signs of removal when cellophane tape is pressed against the coated surface and slowly removed.

Other coatings have been developed to adhere to these alternative lens materials, including protective coatings comprising boron phosphate. However, boron phosphate itself appreciably reduces the transmission values of the coated lens.

### SUMMARY OF THE DISCLOSURE

Embodiments of the invention provide a non-germanium lens coated with a protective and/or AR coating, and processes and tools for providing such a coating. By "non-germanium lens," Applicant refers to lenses that do not consist of approximately 100% polycrystalline or crystalline germanium and contain more than a negligible amount of other elements, or germanium oxides, nitrides, or other germanium compounds. Examples of non-germanium lenses include zinc selenide, zinc sulfide, and chalcogenides. In some embodiments, the non-germanium lens has a coating with a first layer and a second layer over the first layer. The first layer is adapted to adhere well to the non-germanium lens and to provide a good adhering surface for the second layer, which itself is not generally adherable to the non-germanium lens material. Accordingly, embodiments of the invention allow a non-germanium lens to be coated with protective and AR coatings that do not adhere well directly to the non-germanium lens. Hence, embodiments of the invention allow for the use of desirable coatings on lenses that can be used at relatively high temperatures without significant transmittance degradation and in athermalized infrared imaging devices.

In some embodiments, the first layer comprises a Group 14 element (as designated under current International Union of Pure and Applied Chemistry (IUPAC) notation) and/or their compounds (e.g. silicon nitride) and the second layer includes diamond like carbon (DLC). Such elements adhere well to non-germanium optical glass lenses including, consisting essentially of, or consisting of zinc selenide, zinc sulfide, or one or more chalcogenides (e.g., AMTIR-1, AMTIR-3, AMTIR-4, AMTIR-5, and/or GASIR from Umicore). Further, such elements also provide a good adherence layer for the second layer (e.g., DLC layer).

### BRIEF DESCRIPTION OF THE DRAWINGS

The present invention will now be described, by way of example, with reference to the following drawings, in which:

Figure 1 provides a schematic diagram of an exemplary image forming system in accordance with embodiments of the invention.

Figure 2 provides a top plan view of a coated lens in accordance with embodiments of the invention.

Figure 3 provides a sectional view of section A-A of Figure 2.

Figure 4A provides a top plan view of a lens holder in accordance with embodiments of the invention.

Figure 4B provides a side plan view of the lens holder of Figure 4A.

Figure 4C provides a sectional view of section A-A of Figure 4A.

Figure 5A provides a top plan view of an alternate lens holder in accordance with embodiments of the invention.

Figure 5B provides a side plan view of the lens holder of Figure 5A.

Figure 6A provides a top plan view of another alternate lens holder in accordance with embodiments of the invention.

Figure 6B provides a side plan view of the lens holder of Figure 6A.

Figure 6C provides a sectional view of section A-A of Figure 6A.

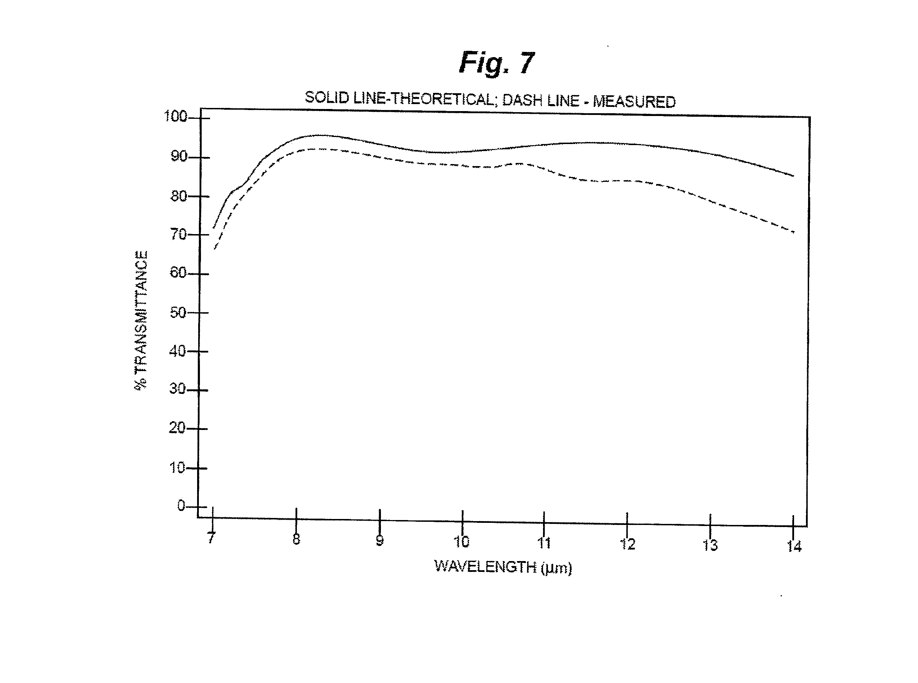

[18.1] Figure 7 is a graph of example experimental and theoretical transmission values at a variety of wavelengths for an example coated lens.

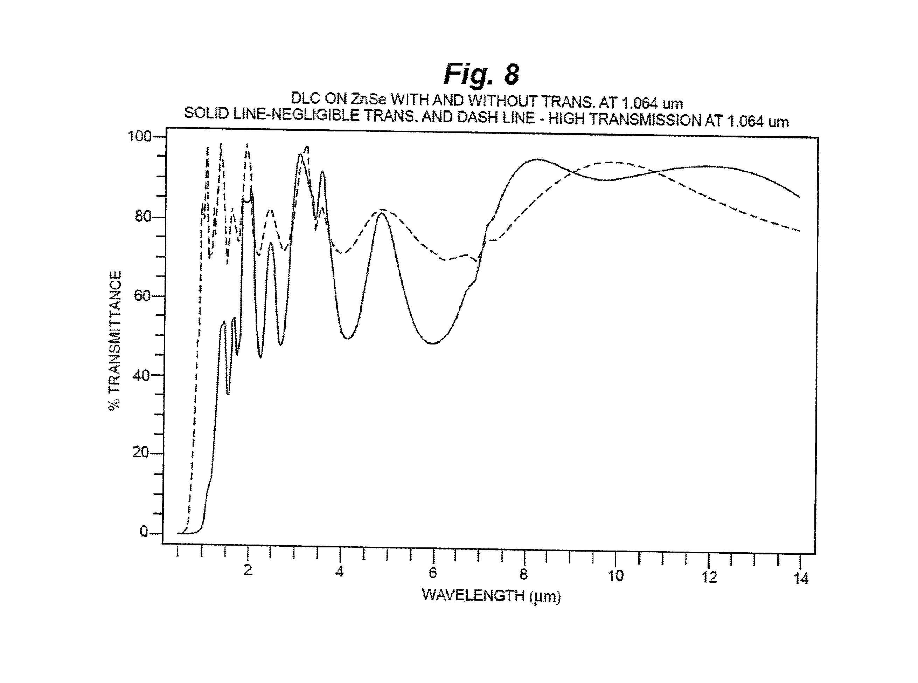

[18.2] Figure 8 is a graph of additional example experimental and theoretical transmission values at a variety of wavelengths for an example coated lens

### DETAILED DESCRIPTION OF ILLUSTRATIVE EMBODIMENTS

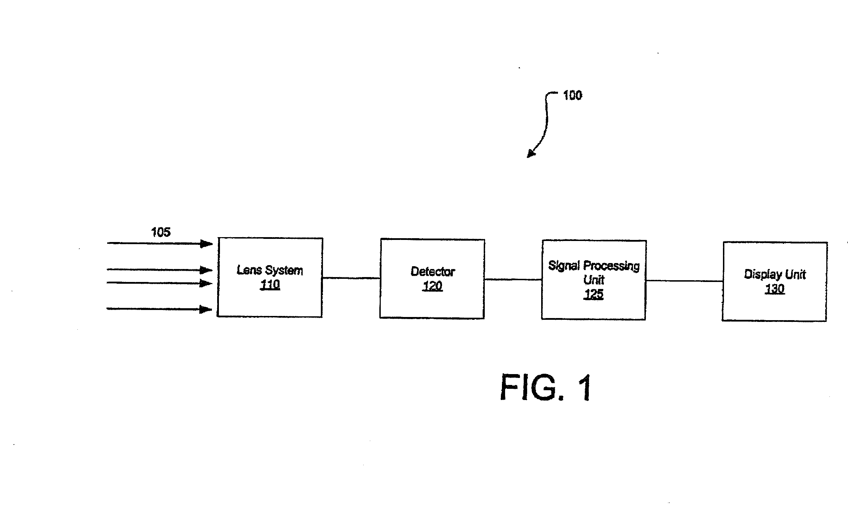

FIG. 1 is a simplified block diagram of one exemplary embodiment of an image forming system 100 consistent with the present invention. The illustrated exemplary system 100 includes a lens system 110, a detector 120, a signal processing unit 125, and a display unit 130. Collimated light 105 imparted on the lens system 110 may be detected by detector 120. In general the detector 120 converts the light imparted thereon to electrical impulses. A variety of detector configurations are well-known to those of ordinary skill in the art. In one embodiment, for example, the detector 210 may be configured as a microbolometer.

The electric impulses provided by the detector 120 may be coupled to the signal processing unit 125. In a known manner, the signal processing unit 125 may translate the electrical impulses into data representative of an image(s) of objects that generated or reflected the light received at the lens 110. The data may be coupled to the display unit, which displays the image(s).

The system can be configured to image a variety of wavelengths. In some embodiments, the system is configured to image wavelengths in the near- or short-wave IR (as used herein, this band is about 0.9 to about 2.5 micrometers). In other embodiments, the system is configured to image mid-wave IR (MWIR). Further embodiments are configured to image long-wave IR (LWIR). As used herein the "MWIR" band or spectrum shall refer to wavelengths from about 3 to about 5 micrometers, and the "LWIR" spectrum or band shall refer to wavelengths from about 7 to about 14 micrometers. In yet other embodiments, the system is configured for simultaneously imaging light from the MWIR and LWIR bands onto a common focal plane.

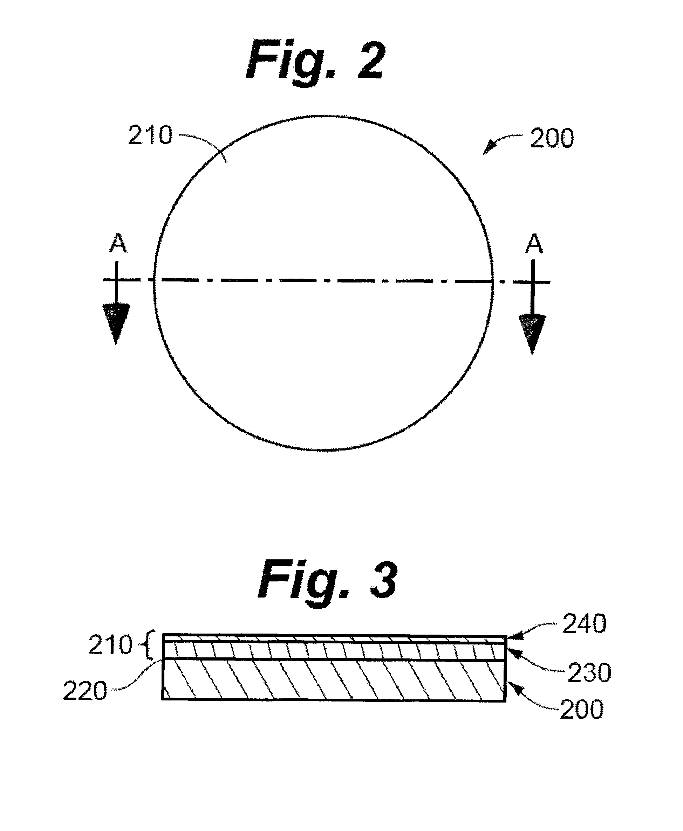

In some embodiments, the lens system 110 includes a lens 200 as shown in Figure 2. The lens 200 can be provided with a coating 210 to provide it with advantageous characteristics, such as enhanced durability and/or antireflective properties. These characteristics enhance the performance of the system in the field. In certain embodiments, the lens is made from a non-germanium material and has a first surface 220 directed towards an ambient environment when the lens is positioned in an IR imaging device. In some embodiments, the substrate material includes, consists essentially of, or consists of an optical glass zinc selenide (ZnSe), zinc sulfide (ZnS), and/or chalcogenide glass (e.g., AMTIR-1 (Ge₃₃As₁₂Se₅₅), AMTIR-3, AMTIR-4, AMTIR-5, and/or GASIR from Umicore). It will be noted that some chalcogenides contain germanium compounds, and these materials behave substantially different than the germanium lenses discussed above. The lens can be provided with any shape and thickness depending on the intended application. In some embodiments, the lens includes a generally circular shape and a thickness of about 1 mm to about 15 mm (e.g., about 2 mm to about 10 mm).

A coating 210 can be provided on the first surface 220 of the lens 200. In such embodiments, the coating will be exposed to the ambient environment when the lens is positioned in the imaging system. In some embodiments, the coating includes a layer stack including, moving outward from the first surface, a first layer 230 and a second layer 240. Such an embodiment is shown in Figure 3. First layer and second layer can include materials selected to provide advantageous properties to the lens and adhere well to the lens. In some embodiments, one or both of the first and second layers are homogonous.

In some embodiments, the coating includes a first layer adapted to adhere well to the lens and to provide a surface to which the second layer can adhere. In some embodiments, the first layer comprises a Group 14 element (as designated under current IUPAC notation, carbon, silicon, germanium, tin, and lead) and/or compounds thereof (including oxides, nitrides, and oxynitrides). In other embodiments, the first layer consists essentially of a Group 14 element or a compound of a Group 14 element. In yet other embodiments, the first layer consists of a Group 14 element or a compound of a Group 14 element. Further, in some embodiments of the invention the first layer comprises a Group 14 element and is substantially free of boron phosphate. Embodiments of the first layer generally adhere well to non-germanium material and provide a surface to which the second layer can adhere without experiencing transmission degradation at high temperatures.

In some embodiments, the first layer comprises germanium. In other embodiments, the first layer consists essentially of germanium or a compound of germanium. In yet other embodiments, the first layer consists of germanium or a compound of germanium. In some embodiments of the invention, the first layer comprises germanium and is substantially free (e.g., entirely free) of boron phosphate.

The first layer can be provided with any desired thickness. Generally, the first layer will have a thickness that sufficiently covers the first surface of the lens and provides a robust deposition site for the second layer. Further, the first layer can be provided in a thickness that any temperature dependent transmission changes are negligible, even at high temperature. For example, when the first layer includes germanium, the germanium layer can be provided at a thickness that the increase in opacity at high temperatures is negligible. In some embodiments, the first layer has a thickness of about 1.0 micron to about 30.0 microns (e.g., about 1.5 microns to about 12 microns).

The first layer can also be provided with any desired crystalline structure. In some embodiments, the crystalline structure of the first layer is not controlled and it is deposited in a polycrystalline structure.

The second layer can include any material useful for imparting a desirable characteristic to the lens, such as enhanced durability and/or antireflection characteristics. In some embodiments, the second layer is a durable layer adapted to protect the lens from the external environment even at high temperatures. In other embodiments the second layer is an antireflective layer adapted to reduce the reflectivity of the lens. Is some embodiments, a single durable and antireflective second layer is provided. In certain embodiments, the first layer is in apposition to the lens and the second layer is in apposition to the first layer. Further, in some embodiments, the coating consists only of the first layer and the second layer, such that there is no other layer between the first layer and the lens, no other layer between the first layer and the second layer, and no other layer provided outward of the second layer.

In some embodiments, the second layer comprises, consists essentially of, or consists of diamond like carbon (DLC) (e.g., a homogonous DLC layer). Such a second layer is useful for providing both antireflectivity and durability to the coating, and adheres well to the first layer described above. In certain embodiments, the first layer (e.g., including a Group 14 element) is in apposition to the lens and the DLC layer is in apposition to the first layer. Further, in some embodiments, the coating consists only of the first layer and DLC layer, such that there is no other layer between the first layer and the lens, no other layer between the first layer and the DLC layer, and no other layer provided outward of the DLC layer.

The second layer can be provided with any desired thickness. Generally, the second layer will have a thickness that sufficiently covers the first layer of the coating and provides the desired characteristic(s) (e.g., durability and/or antireflectivity). In some embodiments, the second layer has a thickness of about 1.0 to about 15.0 microns (e.g., about 1.5 to about 10 microns).

Accordingly, embodiments of the invention allow for durability and AR coatings to be provided on high transmitting lenses that are operable over wide temperature variation (e.g., -54 degrees Celsius to +90 degrees Celsius) without transmittance or image quality degradation. In some embodiments, the system is operable at temperatures greater than about 100 degrees Celsius without significant transmittance degradation. In other embodiments, the system is operable at temperatures greater than about 150 degrees Celsius without significant transmittance or image quality degradation. Embodiments of the invention also include methods of deploying and using any of the systems described herein at these relatively high temperatures and with wide temperature variations.

Embodiments of the invention also include methods of depositing any of the coatings described herein. In some embodiments, the method includes the steps of providing a lens, coating the lens with a first layer, and coating the lens with a second layer to provide a coated lens.

The first and second layers of the coating can be deposited by any suitable method. In some embodiments, the first and/or second layers are deposited by sputtering (e.g., magnetron sputtering), ion assisted deposition (IAD) (e.g., ion assisted evaporation deposition, IAED), chemical vapor deposition (e.g., plasma enhanced chemical vapor deposition, PECVD), and combinations thereof. These coating methods will be readily understood by one of ordinary skill in the art.

In some embodiments, the first layer is deposited by evaporation from electron beam gun at 130 degree centigrade, or at room temperature from an electron beam gun with ion assist deposition, or DC magnetron sputtering. In some embodiments, the second layer is deposited by PECVD. The second layer can be deposited on top of the first layer at room temperature. The thickness of the coating can be optimized for transmission over the spectral range of interest.

Embodiments of the invention also include tools adapted to facilitate the deposition of the coating on the lens. These tools are adapted to securely hold the lens during the coating process, and also to facilitate the transfer of lenses between coating stations.

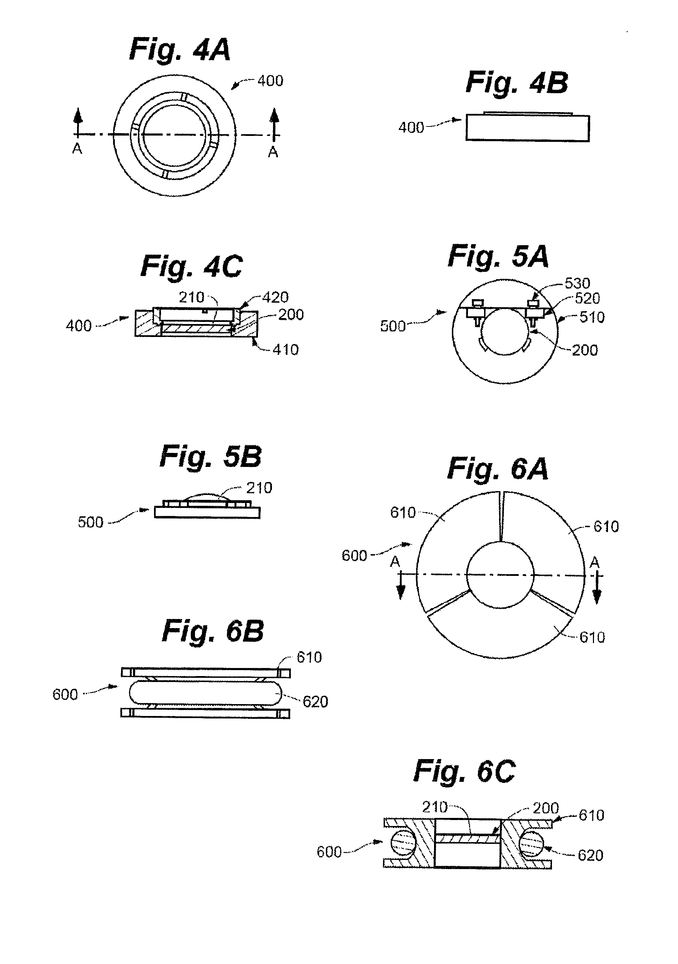

A first embodiment of a lens holder 400 is shown in Figures 4A-C. Figure 4A shows a top plan view of a lens holder and a lens, while Figure 4B shows a side plan view. Figure 4C shows a side cut-away section view of Figure 4A along section A-A. In this embodiment, a base 410 is provided to support a lens 200 that is to be coated. As shown, the base can include a generally annular configuration. After a lens is placed on the base, an insert portion 420 can be inserted over an outer periphery of the lens to retain the lens against the base. As shown, the insert can define an annular central aperture that allows the first surface 220 of the lens to be in coating communication (i.e., positioned towards and generally exposed to) a coating source.

A second alternate embodiment of a lens holder 500 is shown in Figures 5A-B. Figure 5A shows a top plan view of a lens holder and a lens, while Figure 5B shows a side plan view. In this embodiment, a base 510 is provided to support a lens 200 that is to be coated. As shown, the base can include a generally annular configuration. In this embodiment, a spring clamp mechanism 520 is provided to retain the lens. After the lens is placed on the base, one or more tightening elements 530 (e.g. screws) can be actuated to tighten the spring clamp to retain the lens. As shown, the spring clamp defines an annular central aperture that allows the first surface 220 of the lens to be in coating communication with the coating environment.

A third alternate embodiment of a lens holder 600 is shown in Figures 6A-C. Figure 6A shows a top plan view of a lens holder and a lens, while Figure 6B shows a side plan view. Figure 6C shows a side cut-away section view of Figure 6A along section A-A. In this embodiment, the lens holder includes a multiple piece clamp 610 (e.g., a three piece clamp). The clamp can be assembled around a lens 200, and a spring element 620 can be provided to retain the lens within the clamp. When assembled, the clamp defines an annular central aperture that allows the first surface 220 of the lens 200 to be in coating communication with the coating environment.

Embodiments of the invention also include depositing the coating using a lens holder, including any of the lens holders described herein. In such embodiments, the method includes the steps of securing a lens within a lens holder, coating the lens while it is retained within the lens holder, and removing the coated lens from the lens holder.

### EXAMPLES

[40] The following examples are provided to illuminate embodiments of the invention and are not intended to limit the scope of the claims.

### Example 1: Transmission.

Real and theoretical transmission values of a coated lens were determined at a variety of wavelengths. In this example, ZnSe and AMTIR-1 lenses were loaded in tools as described above and a layer of germanium was deposited at 130 degrees Celsius using an electron beam evaporation system. The lenses were cooled down to room temperature and then transferred to a RF magnetron sputtering system and a DLC layer was deposited on top of the germanium film at room temperature using a PECVD process. The germanium and DLC layer thicknesses were optimized to get the highest transmission over the 8.0 to 12.0 micron range. For these examples, the thickness of the first layer was about 1.148 microns and the thickness of the second layer was about 1.225 microns. All the measurements were done at room temperature. Figure 7 is a graph of transmission values between 7 and 14 micrometers. The solid line on Figure 7 is theoretical and the dashed line is measured. As shown, the coated lens had a transmission value of greater than 86.5% from 8.0 to 12.0 micrometers.

Figure 8 illustrates transmittance data between 0.5 and 14 micrometers. Note the solid line on Figure 8 has negligible transmission at 1.064 microns while the dashed line has high transmission at 1.064 microns.

### Example 2: Durability.

The coated samples of ZnSe and AMTIR-1 from Example 1 were tested for durability. Samples were subjected to a salt solubility, severe abrasion, 24 hour humidity and adhesion tests per MIL-PRF-13830, and a windscreen wiper test per RSRE Specification TS 1888, Section 5.4.3, as described further below.

### Salt Solubility

The samples were tested for salt solubility per MIL-PRF-13830, C.4.5.7. The samples passed the salt solubility test.

### Humidity

The samples were subjected to a humidity test per MIL-PRF-13830, C.4.5.8. The samples passed this test.

### Salt Spray/Fog

The samples were evaluated for salt spray/fog resistance per MIL-PRF-13830, C.4.5.9, except using ASTM-G85, Annex 4 Acidified Salt Fog Exposure for 48 Hours. The samples passed this test and were free from evidence of deterioration such as flaking, peeling, cracking, and blistering.

### Severe Abrasion

Per MIL-PRF-13830, C.4.5.10, the samples were tested for severe abrasion resistance. The samples passed the test, with no visible damage to the coated surface when abraded with a coating, eraser abrasion tester as specified in C.4.5.10.

### Adhesion

The samples were also tested for adhesion per MIL-PRF-13830, C.4.5.12. This test requires that the coating show no signs of removal when cellophane tape is pressed against the coated surface and slowly removed. The samples passed this test.

### Windscreen Wiper Test

The samples were also subjected to a windscreen wiper test per RSRE Specification TS 1888, Section 5.4.3. This test requires that no part of the coating show signs of removal when exposed to 5,000 revolutions of a wiper blade under 40 grams load using a sand and water mixture conforming to Ice of DEF STAN 07-55, Type C sand (or equivalent) in 10 milliliters of water. The samples passed this test.

While embodiments of the present invention have been described, it should be understood that various changes, adaptations, and modifications may be made therein without departing from the scope of the appended claims.

## Claims

1. A lens for an IR imaging device, comprising:
a lens, the lens being made from a non-germanium material, the lens having a first surface directed towards an ambient environment when the lens is positioned in an IR imaging device; and
a coating carried by the lens, the coating including, moving outward from the first surface,
a first layer deposited over the first surface; and
a second layer deposited over the first layer.

2. The lens according to claim 1, wherein the second layer is adherable to the first layer and not generally adherable to the non-germanium material of the lens.

3. The lens of claim 1 or claim 2, wherein the lens includes, consists of, or consists essentially of ZnSe, ZnS, or a chalcogenide.

4. The lens of any one of the preceding claims, wherein the first layer comprises, consists of, or consists essentially of a Group 14 element or a compound of a Group 14 element.

5. The lens of any one of claims 1 to 3, wherein the first layer comprises, consists of, or consists essentially of germanium.

6. The lens of claim 4 or claim 5, wherein the first layer is substantially free of boron phosphate.

7. The lens of any one of the preceding claims, wherein the first layer is homogonous or polycrystalline.

8. The lens of any one of the preceding claims, wherein the first layer has a thickness of between about 1 to about 30 microns.

9. The lens of any one of the preceding claims, wherein the second layer comprises, consists of, or consists essentially of diamond like carbon (DLC).

10. The lens of claim 9, wherein the DLC layer is homogonous.

11. The lens of claim 9 or claim 10, wherein the DLC layer has a thickness of between about 1 to about 15 microns.

12. The lens of claim any one of the preceding claims, wherein the first layer is in apposition to the lens and the second layer is in apposition to the first layer, and the coating consists only of the first layer and the second layer.

13. The lens of claim 1, wherein the first layer consists essentially of a Group 14 element or a compound of a Group 14 element and is in apposition to the lens and the second layer consists essentially of a DLC layer and is in apposition to the first layer, and the coating consists only of the first layer and the second layer.

14. A method for coating a lens for an IR imaging device, comprising the steps of:
providing a lens made from a non-germanium material, the lens having a first surface directed towards an ambient environment when the lens is positioned in an IR imaging device;
depositing a first layer over the first surface; and
depositing a second layer over the first layer, the second layer adhering to the first layer and not generally adherable to the non-germanium material of the lens.
